# EUROPÄISCHE PATENTSCHRIFT

(11) **EP 3 898 253 B1**
(45) Veröffentlichungstag und Bekanntmachung des Hinweises auf die Patenterteilung: **24.01.2024**
(21) Anmeldenummer: 19824234.9
(22) Anmeldetag: 09.12.2019
(51) Int. Cl.: B42D 25/44, B42D 25/425, B42D 25/45, B42D 25/324, B42D 25/36, B42D 25/373, B42D 25/351, B42D 25/29, G02B 5/08

(54) **VERFAHREN ZUM HERSTELLEN EINES OPTISCH VARIABLEN SICHERHEITSELEMENTS**
METHOD FOR PRODUCING AN OPTICALLY VARIABLE SECURITY ELEMENT
PROCÉDÉ DE FABRICATION D'UN ÉLÉMENT DE SÉCURITÉ OPTIQUEMENT VARIABLE

(30) Priorität: 17.12.2018 DE 102018009912
(43) Veröffentlichungstag der Anmeldung: 27.10.2021
(73) Patentinhaber: Giesecke+Devrient Currency Technology GmbH, 81677 München (DE)
(72) Erfinder: SCHERER, Kai, Hermann, 81539 München (DE); DEHMEL, Raphael, 83115 Neubeuern (DE); SCHERER, Maik, Rudolf, Johann, 82491 Grainau (DE); STÖCKL, Christian, 83703 Gmund a. Tegernsee (DE)
(86) Internationale Anmeldenummer: PCT/EP2019/025437
(87) Internationale Veröffentlichungsnummer: WO 2020/126077

(56) Entgegenhaltungen:
- EP-A1- 2 960 068
- WO-A1-2011/138039
- WO-A2-2009/100869
- DE-A1-102012 025 262
- DE-A1-102016 012 111

## Beschreibung

Die Erfindung betrifft ein Verfahren zum Herstellen eines optisch variablen Sicherheitselements.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können. Dazu sind die Sicherheitselemente mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes graphisches Motiv zeigen. Im Stand der Technik sind dabei als optisch variable Effekte beispielsweise Bewegungseffekte, Pumpeffekte, Tiefeneffekte oder Flipeffekte beschrieben, die mit Hilfe von Hologrammen, Mikrolinsen oder Mikrospiegeln realisiert werden.

DE 10 2012 025 262 A1 zeigt ein Verfahren zur Herstellung eines Sicherheitselements, wobei in Erhebungen oder Vertiefungen einer Struktur eine absorbierende Nanostruktur vorliegt. In DE 10 2016 012 111 A1 wird ein motivförmiges Sicherheitselement von einem Träger auf ein Zielsubstrat übertragen. Mit einem Laser wird in WO 2009/100869 A2 selektiv in Erhebungen oder Vertiefungen einer Struktur eine Metallisierung entfernt. EP 2 960 068 A1 offenbart ein mikrostiukturiertes Sicherheitselement mit einem speziellen Dünnschichtaufbau umfassend eine Schicht aus metallischen Clustern. WO 2011/138039 A1 offenbart ein Verfahren nach dem Oberbegriff von Anspruch 1.

Ausgehend davon liegt der Erfindung die Aufgabe zugrunde, ein effizientes und präzises Verfahren zur Herstellung fälschungssicherer und visuell attraktiver optisch variabler Sicherheitselemente anzugeben, mit dem die Sicherheitselemente insbesondere mit zwei oder mehr unterschiedlichen Erscheinungsbildern bzw. Effekten in unterschiedlichen Farben ausgebildet werden können.

Diese Aufgabe wird durch die Merkmale des unabhängigen Anspruchs gelöst. Weiterbildungen der Erfindung sind Gegenstand der abhängigen Ansprüche.

Gemäß der Erfindung ist zur Lösung der genannten Aufgabe bei einem in Anspruch 1 definierten Verfahren zum Herstellen eines optisch variablen Sicherheitselements vorgesehen, dass
- ein Träger bereitgestellt wird, dessen Flächenausdehnung eine darauf senkrecht stehende z-Achse definiert,
- in einem Flächenbereich eine transparente Prägelackschicht auf den Träger aufgebracht wird,
- in die Prägelackschicht zumindest eine erste, tiefer liegende Reliefstruktur und eine zweite, höher liegende Reliefstruktur geprägt werden, die in z-Richtung in unterschiedlichen Höhenstufen bezogen auf den flächigen Träger angeordnet sind,
- die zumindest zwei Reliefstrukturen mit einer Nichtmetall-Beschichtung aus zumindest einem nichtmetallischen Material versehen werden, und
- die Nichtmetall-Beschichtung selektiv von der zweiten höher liegenden Reliefstruktur (bzw. den zweiten höher liegenden Reliefstrukturen) abgehoben wird.
Dabei sind die Reliefstrukturen gemäß der Erfindung durch Mikrospiegelanordnungen mit gerichteten Mikrospiegeln gebildet.

Bevorzugt wird die Nichtmetall-Beschichtung von den höher liegenden Reliefstrukturen abgehoben, indem der mit den Reliefstrukturen versehene Träger mit einer Akzeptorfolie, vorzugsweise bei erhöhtem Druck und erhöhter Temperatur, in Kontakt gebracht wird, wobei die Nichtmetall-Beschichtung der höher liegenden Reliefstruktur an der Akzeptorfolie anhaftet. Die Akzeptorfolie wird nachfolgend abgehoben und entfernt dabei die Nichtmetall-Beschichtung nur von der höher liegenden Reliefstruktur. Die Akzeptorfolie kann hierzu insbesondere mit einer Klebeschicht versehen sein.

Als Nichtmetall-Beschichtung wird vorzugsweise eine dielektrische Schicht, beispielsweise eine 100 nm bis 500 nm dicke SiO₂-Schicht aufgebracht, beispielsweise aufgedampft. Weitere bevorzugte Materialbeispiele für die dielektrische Schicht sind TiO2, Al2O3, ZnS, MgF2 und Si.

Die zumindest zwei Reliefstrukturen werden vorteilhaft vor der Beschichtung mit dem nichtmetallischen Material mit einer semitransparenten Absorberschicht versehen. Die semitransparente Absorberschicht wird dann zusammen mit der Nichtmetall-Beschichtung selektiv von der höher liegenden Reliefstruktur abgehoben. Die semitransparente Absorberschicht kann insbesondere eine dünne Metallschicht, beispielsweise eine dünne Chromschicht oder, besonders vorteilhaft, eine dünne Aluminiumschicht mit einer Schichtdicke darstellen. Die Schichtdicke wird, insbesondere für Aluminium, zwischen etwa 1 nm und etwa 15 nm liegen. Cu, Ag oder Metall-Legierungen können weiter alternativ oder ergänzend verwendet werden.

In einer vorteilhaften Weiterbildung wird die höher liegende Reliefstruktur nach dem Abheben der Nichtmetall-Beschichtung selektiv mit einer weiteren Beschichtung versehen. Beispielsweise kann durch Tampondruck eine lasierende Buntfarbe oder eine andere gewünschte Schicht selektiv nur auf die höher liegende Reliefstruktur aufgebracht werden.

Die zumindest zwei Reliefstrukturen werden nach dem Abheben der Nichtmetall-Beschichtung und gegebenenfalls dem selektiven Aufbringen einer weiteren Beschichtung vorteilhaft mit einer Metallbeschichtung versehen. Die Metallbeschichtung kann insbesondere durch eine dicke Aluminiumschicht mit einer Schichtdicke von 30 nm oder mehr, beispielsweise von etwa 50 nm gebildet sein.

Mit Vorteil werden die Reliefstrukturen jeweils mit einer vorgegebenen maximalen Ganghöhe erzeugt und der Abstand der zumindest zwei Höhenstufen in z-Richtung wird größer als die vorgegebene maximale Ganghöhe der tiefer liegenden Reliefstruktur gewählt. Vorzugsweise beträgt der Abstand der zumindest zwei Höhenstufen in z-Richtung mehr als 120%, insbesondere mehr als 130% (und weniger als 300%), besonders bevorzugt zwischen 150% und 200%, der vorgegebenen, maximalen Ganghöhe der tiefer liegenden Reliefstruktur. Konkret können beide Reliefstrukturen mit einer maximalen Ganghöhe von 6 µm oder weniger, vorzugsweise 3,5 µm oder weniger, erzeugt werden. Der Abstand der zumindest zwei Höhenstufen in z-Richtung zwischen 1 µm und 10 µm, vorzugsweise zwischen 3 µm und 7 µm gewählt werden. Denkbar sind, insbesondere für Anwendungen außerhalb der Sicherheitselemente, auch größere Werte.

Beide Reliefstrukturen sind durch Mikrospiegelanordnungen mit gerichteten Mikrospiegeln gebildet, insbesondere mit planen Spiegeln, Hohlspiegeln und/oder fresnelartigen Spiegeln. Vorzugsweise umfasst die Reliefstruktur oder besteht die Reliefstruktur aus einer Vielzahl von Mikrospiegeln, die das Licht achromatisch gemäß der geometrischen Optik reflektieren (achromatisch wirksame reflektierende Struktur). Mikrospiegel weisen einen Reflexionsgrad auf von mehr als 60%, bevorzugt von mehr als 80%, sind weiter bevorzugt opak (100%), jeweils gemessen im sichtbaren Spektialbereich. Eine (oder beide) der Reliefstrukturen können also eine achromatisch wirksame, reflektierende Reliefstruktur sein. Dabei kann optional die zweite (oder eine weitere) Reliefstruktur eine anders wirksame - insbesondere diffraktiv oder refraktiv wirksame - Reliefstruktur sein, beispielsweise ein Hologramm. Die lateralen Abmessungen der Mikrospiegel liegen dabei vorteilhaft unterhalb von 30 µm, bevorzugt bei unterhalb von 15 µm. Die lateralen Abmessungen der Mikrospiegel sind dabei jeweils größer als 300 nm, insbesondere größer als 500 nm. Besonders bevorzugt sind die Mikrospiegel größer als 2 µm. Unerwünschte diffraktive Effekte werden somit vermieden. Die lateralen Abmessungen liegen somit vorzugsweise zwischen 2 und 30 µm bzw. bevorzugt zwischen 3 und 15 µm. Für Mikrospiegel mit kleineren Abmessungen können unerwünschte diffraktive Effekte unterdrückt werden, insbesondere durch eine hinreichende, beispielsweise quasizufällige, Variation der lateralen Abmessungen.

Mit Vorteil wird als Träger ein transparenter Träger bereitgestellt, oder der Träger wird ablösbar mit der Prägelackschicht verbunden, um eine Betrachtung des Sicherheitselements von der Seite der Prägelackschicht her zu ermöglichen. Bei einem transparenten Träger kann die Betrachtung durch den Träger hindurch erfolgen, ein nichttransparenter Träger muss für die Betrachtung von der Prägelackschichtseite her abgelöst werden, etwa nach dem Übertragen des Sicherheitselements auf ein Zielsubstrat.

In einer vorteilhaften Erfindungsvariante wird in die Prägelackschicht ein Raster mit ersten Rasterbereichen mit der ersten, tiefer liegenden Reliefstruktur und zweiten Rasterbereichen mit der zweiten, höher liegenden Reliefstruktur geprägt. Die Abmessungen der Rasterbereiche liegen dabei in einer oder beiden lateralen Richtungen unterhalb von 140 µm, vorzugsweise zwischen 20 µm und 100 µm, insbesondere zwischen 20 µm und 60 µm.

Alternativ oder zusätzlich werden in die Prägelackschicht vorteilhaft Effektbereiche mit der ersten, tiefer liegenden Reliefstruktur bzw. mit der zweiten, höher liegenden Reliefstruktur geprägt, wobei zumindest ein Teil der Effektbereiche laterale Abmessungen von mehr als 140 µm aufweist. Die Effektbereiche mit der ersten bzw. zweiten Reliefstruktur sind dabei jeweils unmittelbar aneinander angrenzend ausgebildet.

In den tiefer liegenden Effektbereichen, die laterale Abmessungen von mehr als 200 µm aufweisen, wird vorteilhaft zusätzlich eine Anordnung von höher liegenden Stützstrukturen vorgesehen, deren relative Flächendeckung kleiner als 15%, vorzugsweise kleiner als 10% ist. Die relative Flächendeckung der Stützstrukturen bezieht sich dabei auf die Fläche des jeweiligen Effektbereichs. Die Stützstrukturen werden vorteilhaft in Form schmaler Stege oder schmaler Stützpfeiler mit einer Linienbreite von weniger als 20 µm, insbesondere weniger als 10 µm, gebildet. Alternativ oder zusätzlich werden die Stützstrukturen in einem ein- oder zweidimensionalen Raster angeordnet, wobei die Rasterweite des Rasters unterhalb von 140 µm und vorzugsweise zwischen 20 µm und 100 µm liegt. Die Stützstrukturen können sich insbesondere bis zu der Höhenstufe der höher liegenden Reliefstruktur erstrecken. Erforderlich ist allerdings in der Regel lediglich, dass die Stützstrukturen die Ganghöhe der tiefer liegenden Reliefstruktur überragen, und so verhindern, dass beim Abheben der Nichtmetall-Beschichtung, beispielsweise mittels einer Akzeptorfolie, auch Material von den großflächigen Effektbereichen mit tiefer liegenden Reliefstrukturen abgehoben wird.

Aufgrund ihrer geringen Strichbreite und kleinen Flächendeckung fallen die Stützstrukturen optisch kaum oder gar nicht störend auf. Ihre optische Erkennbarkeit kann weiter dadurch reduziert werden, dass ihre Oberseite mit einer anderen Neigung als die höher liegenden und tiefer liegenden Reliefstrukturen ausgebildet wird. Die Oberseite der Stützstrukturen kann auch gerundet, geriffelt oder mit einer anderen reflexionsvermindernden Struktur versehen werden, um die Sichtbarkeit der Stützstrukturen weiter zu reduzieren.

Es versteht sich, dass die beiden Erfindungsvarianten mit dem Raster und den Effektbereichen auch miteinander kombiniert werden können.

Mit Vorteil wird durch die oben genannten Maßnahmen auf der tiefer liegenden Reliefstruktur eine erste Farbbeschichtung erzeugt, die die genannte Nichtmetall-Beschichtung umfasst. Vorzugsweise umfasst die erste Farbbeschichtung die genannte semitransparente Absorberschicht, die genannte Nichtmetall-Beschichtung und die genannte Metallbeschichtung und bildet dadurch ein farbkippendes Dünnschichtelement.

Ebenfalls mit Vorteil wird auf der höher liegenden Reliefstruktur eine zweite Farbbeschichtung erzeugt, die die genannte Metallbeschichtung umfasst. Vorzugsweise umfasst die zweite Farbbeschichtung neben der genannten Metallbeschichtung auch eine lasierende Buntfarbe und bildet dadurch eine farbstabile Farbbeschichtung. In anderen, ebenfalls vorteilhaften Varianten umfasst die zweite Farbbeschichtung neben der genannten Metallbeschichtung eine Dielektrikumsschicht oder umfasst eine Absorberschicht und eine Dielektrikumsschicht. Die zweite Farbbeschichtung bildet dadurch ein farbkippendes Dünnschichtelement, vorzugweise mit einem Farbkippeffekt, der sich von dem Farbkippeffekt eines auf der tiefer liegenden Reliefstruktur angeordneten Dünnschichtelements unterscheidet.

Auch wenn die Erfindung im Folgenden an bevorzugten Beispielen mit reflektierender Wirkung beschrieben wird, sind jeweils analoge Beispiele mit in Transmission wirksamen Sicherheitselementen denkbar.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit zwei erfindungsgemäßen Sicherheitselementen,
- Fig. 2: schematisch einen Ausschnitt des ersten Sicherheitselements der Fig. 1 im Querschnitt,
- Fig. 3: in (a) bis (f) Zwischenschritte bei der Herstellung des Sicherheitselements der Fig. 2,
- Fig. 4: in (a) bis (d) einige konkrete vorteilhafte Ausgestaltungen des Rasters der Prägestruktur des Sicherheitselements der Fig. 2 in Aufsicht,
- Fig. 5: schematisch einen Ausschnitt des zweiten Sicherheitselements der Fig. 1 im Querschnitt, und
- Fig. 6: in (a) bis (d) Zwischenschritte bei der Herstellung des Sicherheitselements der Fig. 5.

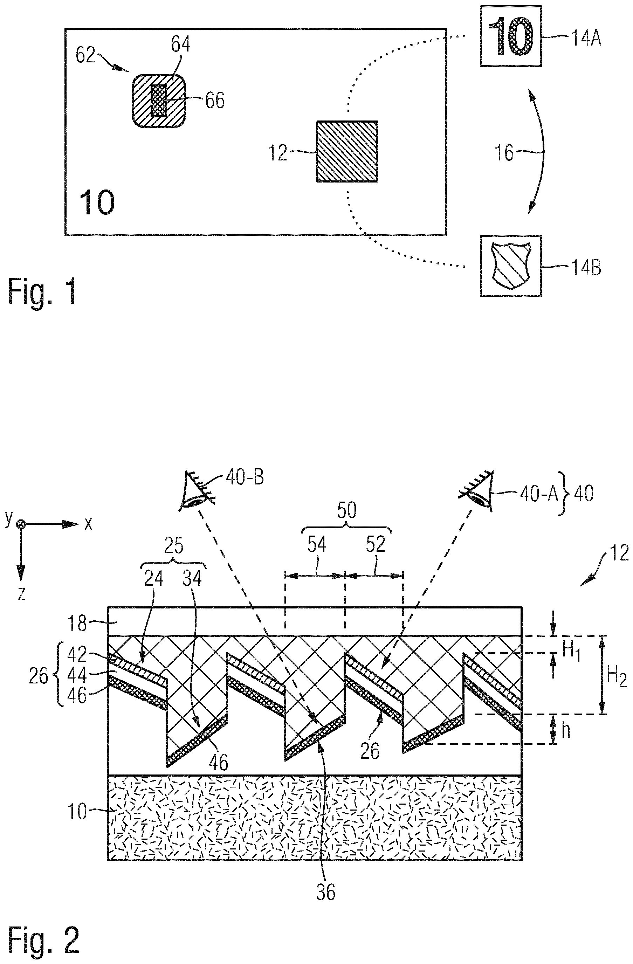

Die Erfindung wird nun am Beispiel von Sicherheitselementen für Banknoten erläutert. Figur 1 zeigt dazu eine schematische Darstellung einer Banknote 10 mit zwei optisch variablen Sicherheitselementen 12 und 62, die jeweils in Form eines aufgeklebten Transferelements ausgebildet sind. Es versteht sich allerdings, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen beispielsweise auch Sicherheitsfäden oder Sicherheitsstreifen in Betracht. Beide in Fig. 1 gezeigte Sicherheitselemente 12, 62 sind selbst sehr flach ausgebildet, vermitteln dem Betrachter aber dennoch einen dreidimensionalen Eindruck.

Das erste Sicherheitselement 12 zeigt zudem einen binären Farb- und Effektwechsel beim Kippen der Banknote 10, wobei aus einer ersten Betrachtungsrichtung ein erstes, sich scheinbar aus der Ebene der Banknote 10 herauswölbendes Motiv 14-A, beispielsweise eine gewölbte Darstellung der Wertzahl "10", mit einem ersten Farbeindruck erscheint. Aus einer zweiten Betrachtungsrichtung zeigt sich ein zweites, sich scheinbar aus der Ebene der Banknote 10 herauswölbendes Motiv 14-B, beispielsweise eine gewölbte Darstellung eines Wappens mit einer zweiten Farbe. Beim Kippen 16 der

Banknote 10 oder einer entsprechenden Änderung der Betrachtungsrichtung springt das Erscheinungsbild des Sicherheitselements 12 plötzlich von dem ersten zum zweiten Erscheinungsbild bzw. beim Zurückkippen vom zweiten zum ersten Erscheinungsbild. Die Änderung des Motivs und der Farbe erfolgt dabei gleichzeitig und ohne eine Zwischen- oder Übergangsstufe, in der beide Motive bzw. Farben gleichzeitig sichtbar wären oder ein Motiv in der Farbe des anderen Motivs sichtbar wäre. Das Erscheinungsbild springt daher übergangslos zwischen zwei Erscheinungsbildern 14-A, 14-B und wird daher als binärer Farb- und Effektwechsel bezeichnet. Wie üblich, wird auch an dieser Stelle von einer Betrachtung unter weißem, gerichteten (also nicht diffusem) Licht ausgegangen. Als Lichtquelle für die Betrachtung kann die Sonne oder eine Kunstlichtquelle, die insbesondere als punktförmig bezeichnet wird, dienen.

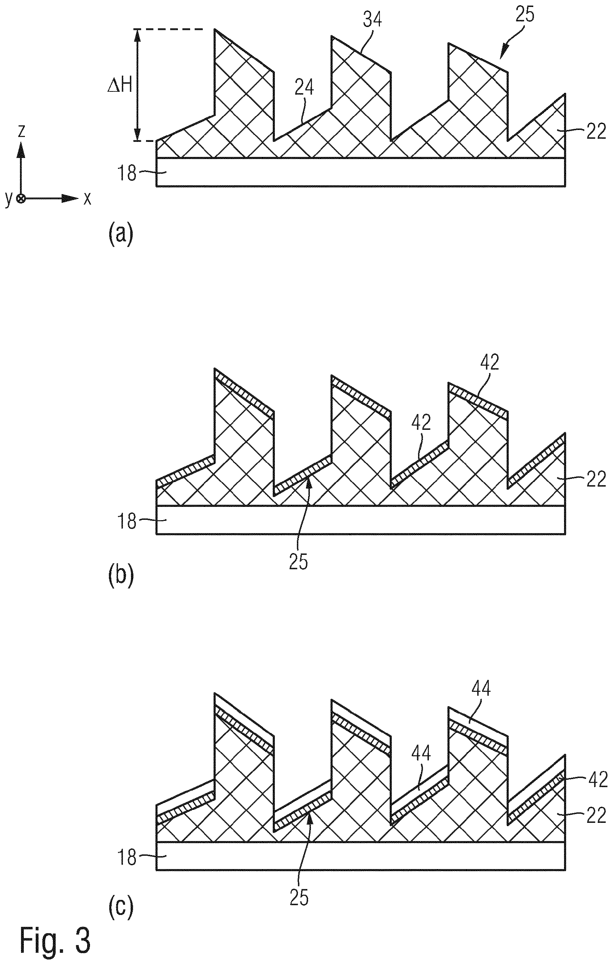

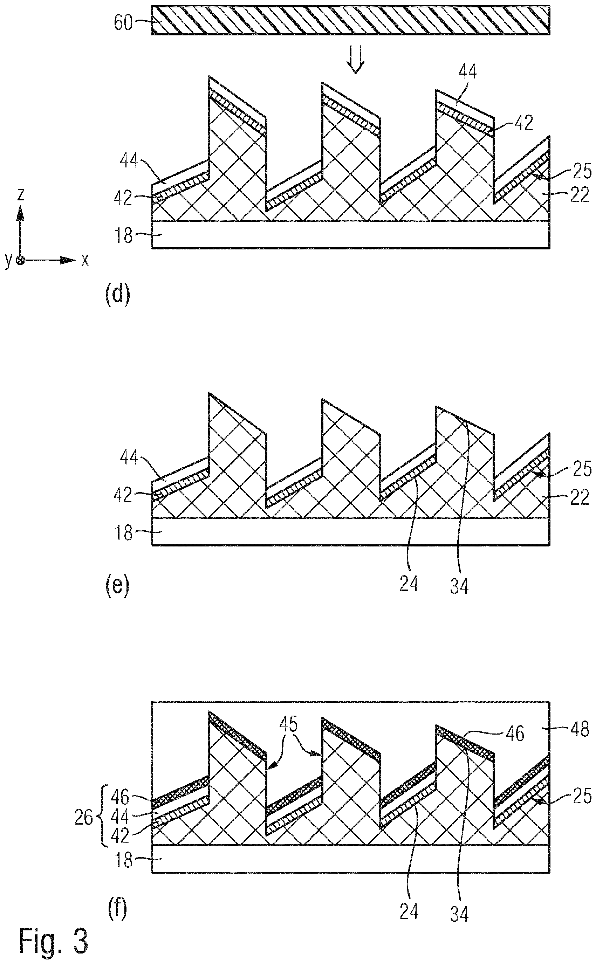

Der besondere Aufbau und die erfindungsgemäße Herstellung des ersten Sicherheitselements 12 wird nun mit Bezug auf die Figuren 2 und 3 näher erläutert, wobei Fig. 2 schematisch einen Ausschnitt des auf der Banknote 10 aufgebrachten Sicherheitselements 12 im Querschnitt und Fig. 3 verschiedene Zwischenschritte bei der Herstellung des Sicherheitselements 12 zeigt.

Das Sicherheitselement 12 enthält einen flächigen, transparenten Träger 18, dessen Flächenausdehnung eine x-y-Ebene und eine darauf senkrecht stehende z-Achse definiert. Auf dem Träger 18 ist ein mehrfarbiger reflektiver Flächenbereich angeordnet, der einen Prägestrukturbereich 25 mit ineinander verschachtelten Mikrospiegel-Prägungen in zwei unterschiedlichen Höhenstufen enthält. Ein erster Prägebereich 24 ist dabei durch Mikrospiegel-Prägungen gegeben, deren Grundflächen in einer Höhe H₁ über dem Träger 18 liegen. Ein zweiter Prägebereich 34 ist durch Mikrospiegel-Prägungen gegeben, deren Grundflächen in einer Höhe H₂ > H₁ über dem Träger 18 liegen. Die Höhe wie auch die Richtung der positiven z-Achse wird dabei stets vom Träger 18 ausgehend gemessen. Da das Sicherheitselement 12 auf Betrachtung von der Unterseite, also der Seite des Trägers 18 her ausgelegt ist, erstreckt sich die z-Achse in der Darstellung Fig. 2 vom Träger weg nach unten.

Die Mikrospiegelprägungen 24, 34 (nachfolgend auch Mikrospiegelanordnungen genannt) enthalten jeweils eine Vielzahl von gegen die x-y-Ebene geneigten Mikrospiegeln, deren lokalen Neigungswinkel gerade so gewählt sind, dass die Reliefstruktur der Mikrospiegelprägungen 24, 34 nach der weiter unten beschriebenen Farbbeschichtung 26, 36 ein gewünschtes optisches Erscheinungsbild erzeugt. Konkret sind die Neigungswinkel der Mikrospiegel im Ausführungsbeispiel so gewählt, dass die Mikrospiegelanordnung 24 in einem auf die Flächennormale bezogenen Betrachtungswinkelbereich von +5° bis +20° (Betrachtungsposition 40-A) die gewölbte Darstellung der Wertzahl "10" erzeugt und die Mikrospiegelanordnung 34 in einem Betrachtungswinkelbereich von -5° bis -20° (Betrachtungsposition 40-B) die gewölbte Darstellung des Wappens erzeugt. Die Mikrospiegel der Mikrospiegelprägungen 24, 34 selbst weisen im Ausführungsbeispiel eine laterale Abmessung von 10 x 10 µm² und eine maximale Höhe h von 3,5 µm auf, während ihr auf die Grundflächen bezogener Höhenversatz ΔH = H₂ - H₁ bei ΔH=6 µm liegt.

Zur Erzeugung eines visuellen Kontrasts sind die Mikrospiegelanordnungen 24, 34 jeweils mit einer Farbbeschichtung 26, 36 versehen, die bei der Betrachtung aus einer Betrachtungsposition 40-A oder 40-B des Betrachters 40 den unterschiedlichen Farbeindruck der Mikrospiegelanordnungen erzeugen. Im Ausführungsbeispiel weist die Mikrospiegelanordnung 24 auf Höhenstufe H₁ als Farbbeschichtung ein farbkippendes Dünnschichtelement 26 auf, das aus einer Absorberschicht 42, einer Abstandsschicht 44 und einer Metallschicht 46 besteht. Die Mikrospiegelanordnung 34 auf Höhenstufe H₂ weist dagegen als Farbbeschichtung nur eine Metallschicht 46 auf und zeigt einen farbstabilen metallischen Farbeindruck ohne Farbänderung beim Kippen.

Wie in Fig. 2 gezeigt, ist das Sicherheitselement 12 für eine Betrachtung von der Rückseite, also der Trägerseite her ausgelegt. Der Träger 18 ist im Ausführungsbeispiel transparent und bildet einen Teil des auf der Banknote 10 verbleibenden Sicherheitselements. In anderen Gestaltungen kann der Träger 18 nach dem Übertragen des Sicherheitselements 12 auf das Zielsubstrat auch abgezogen werden. In diesem Fall kann für die Herstellung des Sicherheitselements selbstverständlich auch ein nicht-transparenter Träger verwendet werden.

Die beiden Mikrospiegelanordnungen 24, 34 sind im Ausführungsbeispiel der Fig. 2 im gesamten Flächenbereich des Sicherheitselements 12 in Form eines regelmäßigen Rasters 50 ineinander verschachtelt, wobei in den ersten Rasterbereichen 52 die Mikrospiegelprägungen 24 der Höhenstufe H₁ vorliegen, während in den komplementären zweiten Rasterbereichen 54 die Mikrospiegelprägungen 34 der Höhenstufe H₂ vorliegen. Konkret bilden die Rasterbereiche 52, 54 im Ausführungsbeispiel ein Schachbrettmuster, bei dem jedes Feld, also jeder Rasterbereich 52, 54 eine Abmessung von 100 µm x 100 µm aufweist. Da die Mikrospiegel in der Regel deutlich kleiner sind, hier beispielsweise eine Kantenlänge von nur 10 µm aufweisen, fällt das Raster 50, anders als in der vereinfachten schematischen Darstellung der Figuren 2 und 3, im Allgemeinen nicht mit dem Raster der Mikrospiegel der Mikrospiegelanordnungen 24, 34 zusammen.

Die erfindungsgemäße Herstellung des Sicherheitselements 12 wird nun mit Bezug auf die Figur 3 näher beschrieben, wobei (a) bis (f) jeweils Zwischenschritte bei der Herstellung des Sicherheitselements zeigen.

Zunächst wird mit Bezug auf Fig. 3(a) ein transparenter Träger 18, beispielsweise eine transparente PET-Folie bereitgestellt und mit einer transparenten Prägelackschicht 22 mit schwacher Metallhaftung versehen. Mit einem selbst nicht gezeigten Prägewerkzeug wird die gewünschte Prägestruktur 25 mit den Mikrospiegelprägungen 24, 34 in die Prägelackschicht 22 eingeprägt.

Die so erzeugte Prägestruktur 25 wird dann vollflächig mit einer semitransparenten Absorberschicht 42 eines Dünnschichtaufbaus bedampft, wie in Fig. 3(b) gezeigt. Als Absorberschicht kann eine dünne Chromschicht eingesetzt werden. Wegen der zu guten Haftung von Chrom zum Prägelack 22 ist es derzeit jedoch bevorzugt, eine dünne Aluminiumschicht als semitransparente Absorberschicht 42 einzusetzen. Die Absorberschicht 42 wird eine Schichtdicke von 1 nm bis 15 nm, bevorzugt von 1 bis 8 nm, haben. Alternativ kann auf der (Chromschicht als) Absorberschicht 42 eine zusätzliche Release-Schicht aufgebracht werden, um die Haftung zu reduzieren.

Anschließend wird die mit der Absorberschicht 42 versehene Prägestruktur 25 vollflächig mit einer Abstandsschicht 44 des Dünnschichtaufbaus bedampft, wie in Fig. 3(c) gezeigt. Als Abstandsschicht 44 kann beispielsweise eine 100 bis 400 nm dicke SiO₂-Schicht eingesetzt werden. Die Abstandsschicht 44 bildet in diesem Ausführungsbeispiel die weiter oben erwähnte Nichtmetall-Beschichtung.

Mit Bezug auf Fig. 3(d) wird nun eine Akzeptorfolie 60 mit guter Metallhaftung bereitgestellt und mit der beschichteten Prägestruktur der Fig. 3(c) in Kontakt gebracht. Die Akzeptorfolie 60 kann beispielsweise mit einer Klebeschicht versehen sein und unter erhöhtem Druck und bei erhöhter Temperatur mit der beschichteten Prägestruktur 25, 42, 44 zusammengepresst werden, wodurch die Akzeptorfolie 60 mit den auf den höher liegenden Mikrospiegelprägungen 34 vorliegenden Beschichtungsteilen verklebt. Wegen der Kleinheit der Rasterbereiche 52 sind die tiefer liegenden Mikrospiegelprägungen 24 durch den Höhenversatz ΔH geschützt und verkleben nicht mit der Akzeptorfolie 60.

Beim nachfolgenden Trennen von Akzeptorfolie und Prägestruktur, beispielsweise durch Trennwicklung, werden die verklebten Bereiche der Absorberschicht 42 und der Abstandsschicht 44 zusammen mit der Akzeptorfolie entfernt. Diese Schichten werden daher selektiv von in den höher liegenden Bereichen 34 der Prägestruktur entfernt, während sie in den tiefer liegenden Bereichen 24 erhalten bleiben, wie in Fig. 3(e) dargestellt.

Anschließend wird die strukturierte Prägestruktur 25 vollflächig mit einer Reflektorschicht 46, beispielsweise einer 50 nm dicken Aluminiumschicht versehen. In den tiefer liegenden Bereichen 24 wird dadurch das Dünnschichtelement 26 aus Absorberschicht 42, Abstandsschicht 44 und Reflektorschicht 46 vervollständigt, während sich in den höher liegenden Bereichen 34 eine reine Metallbeschichtung der Mikrospiegel ergibt, wie in Fig. 3(f) gezeigt. Um eine bessere Haftung der Aluminiumschicht 46 auf dem Lack 22 sicherzustellen, kann der Bedampfung mit Aluminium eine Chrombekeimung oder das Aufbringen einer ultradünnen Chromschicht einer Dicke von weniger als 5 nm vorangestellt werden.

Zuletzt wird die Strukturseite der metallisierten Prägestruktur noch mit einer Lackbeschichtung 48 und gegebenenfalls weiteren Beschichtungen versehen. Um eine gute Haftung zwischen dem Lack 48 und der Aluminiumbeschichtung 46 sicherzustellen kann der Höhenversatz ΔH relativ groß (5 µm bis 10 µm) gewählt werden, so dass der Lack an den Flanken 45 der Prägestruktur 25 anhaften und den Verbund stärken kann.

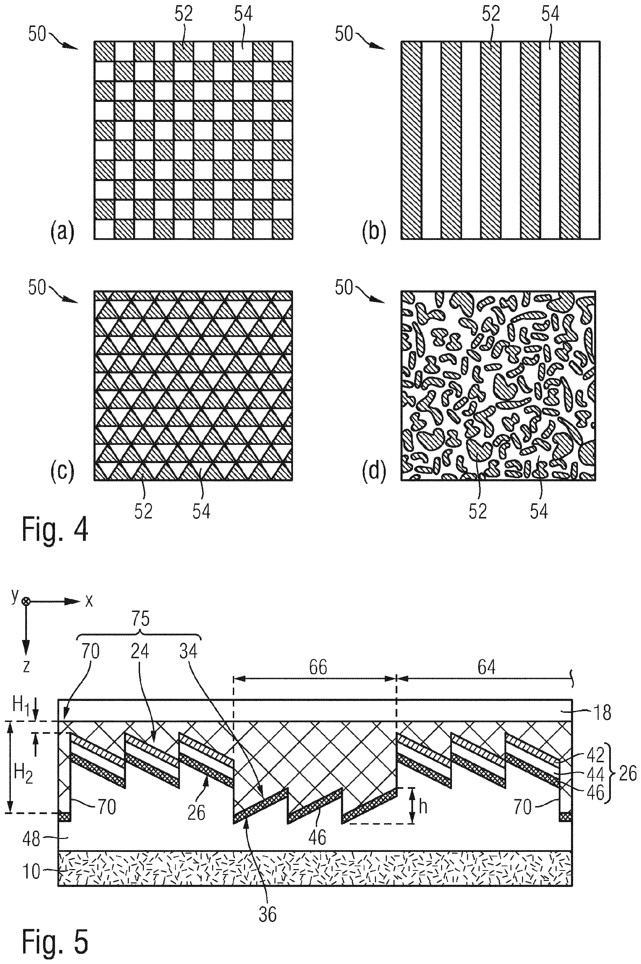

Figur 4 zeigt einige konkrete vorteilhafte Ausgestaltungen des Rasters 50 der Prägestruktur 25 in Aufsicht. Dabei sind die tiefer liegenden Rasterbereiche 52 der Mikrospiegelprägungen 24 jeweils schraffiert und die höher liegenden Rasterbereiche 54 der Mikrospiegelprägungen 34 ohne Schraffur dargestellt. Figur 4(a) zeigt dabei ein Raster 50 wie es in Fig. 2 verwendet ist, bei dem die Rasterbereiche 52, 54 ein Schachbrettmuster bilden. Die Abmessung der Rasterbereiche liegt vorteilhaft zwischen 20 x 20 µm² und 140 x 140 µm², insbesondere zwischen 20 x 20 µm² und 60 x 60 gm², die Flächendeckung beträgt 50%. Soll eine von 50% abweichende Flächendeckung erzeugt werden, kann ein Teil der Rasterbereiche 52 oder 54 mit Mikrospiegeln der jeweils anderen Höhenstufe belegt werden. In dieser, aber auch in den nachfolgend beschriebenen Gestaltungen liegt die Flächendeckung des Rasters mit ersten Rasterbereichen 52 (bzw. 54) vorzugsweise zwischen 30% und 70%, insbesondere zwischen 40% und 60%. Durch die Flächendeckung der ersten bzw. zweiten Rasterbereiche kann die Helligkeit der jeweils erzeugten Erscheinungsbilder nach Wunsch eingestellt werden.

Figur 4(b) zeigt ein Raster 50 mit alternierend angeordneten streifenförmigen Rasterbereichen 52, 54. Die Breite der Rasterbereichen liegt vorteilhaft zwischen 20 µm und 140 µm, insbesondere zwischen 20 µm und 60 µm. Die Länge der Rasterbereiche ist beliebig und kann mehrere Millimeter oder sogar einige Zentimeter betragen. Die Flächendeckung kann einfach über die relative Breite der Rasterbereiche eingestellt werden.

Die Rasterbereiche können auch andere polygonale Formen oder unregelmäßige Formen aufweisen. Beispielhaft zeigt Fig. 4(c) eine Ausgestaltung, bei der die Rasterbereiche 52, 54 des Rasters 50 durch Dreiecke gebildet sind. Bei dem Raster 50 der Fig. 4(d) sind die Rasterbereiche 52, 54 durch unregelmäßige Formen gebildet.

Zurückkommend auf die Darstellung der Fig. 1 ist auch das zweite auf die Banknote 10 übertragene Sicherheitselement 62 selbst sehr flach ausgebildet, vermittelt dem Betrachter aber dennoch den dreidimensionalen Eindruck eines sich scheinbar aus der Ebene der Banknote 10 herauswölbenden Motivs 64, das mit einer ersten Farbe erscheint. Das Motiv 64 kann beispielsweise eine Wertzahl, ein Portrait oder ein anderes graphisches Motiv darstellen. Innerhalb des Motivs 64 mit der ersten Farbe ist in einem Teilbereich 66 ein Bewegungseffekt in einer zweiten Farbe sichtbar. Beispielsweise kann sich ein heller Balken beim Kippen der Banknote 10 entlang des Teilbereichs 66 auf und ab bewegen und einen sogenannten Rolling-Bar-Effekt erzeugen. Als eine wesentliche Besonderheit sind die Bereiche unterschiedlicher Farbe (erste und zweite Farbe) und unterschiedlicher Effekte (dreidimensionales Motiv bzw. laufender Balken) dabei exakt zueinander gepassert. Diese Passerung wird daher nachfolgend auch als Farbe-zu-Effekt-Passerung bezeichnet.

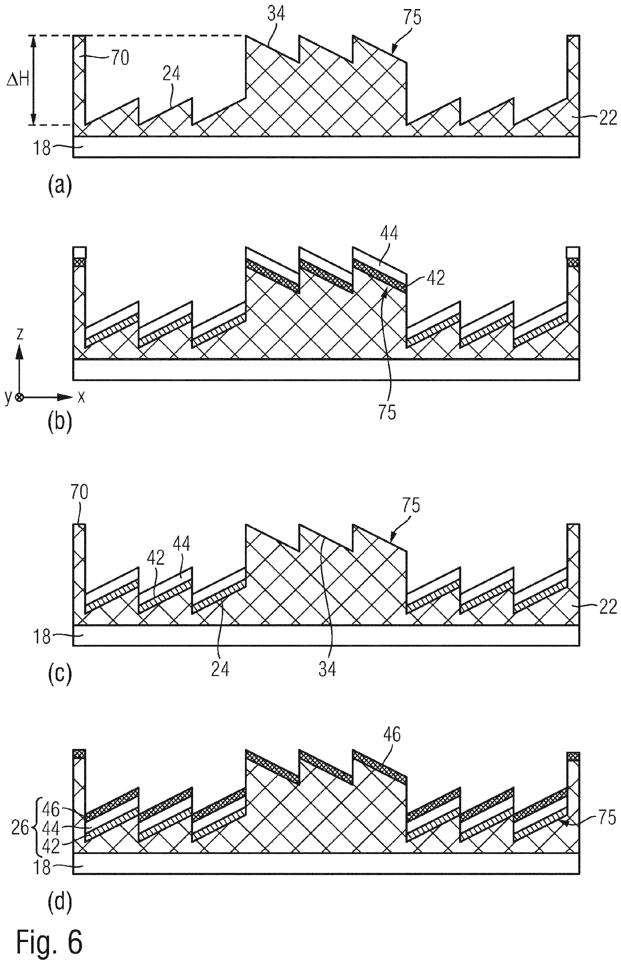

Der besondere Aufbau und die erfindungsgemäße Herstellung des zweiten Sicherheitselements 62 wird nun mit Bezug auf die Figuren 5 und 6 näher erläutert, wobei Fig. 5 schematisch einen Ausschnitt des auf der Banknote 10 aufgebrachten Sicherheitselements 62 im Querschnitt und Fig. 6 verschiedene Zwischenschritte bei der Herstellung des Sicherheitselements 62 zeigt.

Das Sicherheitselement 62 ist in weiten Teilen ähnlich wie das im Zusammenhang mit Fig. 2 beschriebene Sicherheitselement 12 aufgebaut, so dass einander entsprechende Elemente jeweils mit denselben Bezugszeichen bezeichnet werden. Das Sicherheitselement 62 enthält einen flächigen, transparenten Träger 18, dessen Flächenausdehnung eine x-y-Ebene und eine darauf senkrecht stehende z-Achse definiert. Auf dem Träger 18 ist ein mehrfarbiger reflektiver Flächenbereich angeordnet, der einen Prägestrukturbereich 75 mit Mikrospiegel-Prägungen in zwei unterschiedlichen Höhenstufen, sowie eine Anordnung optisch unauffälliger Stützstrukturen 70 enthält.

Ein erster Prägebereich 24 ist durch Mikrospiegel-Prägungen gegeben, deren Grundflächen in einer Höhe H₁ über dem Träger 18 liegen, während ein zweiter Prägebereich durch Mikrospiegel-Prägungen 34 gegeben ist, deren Grundflächen in einer Höhe H₂ > H₁ über dem Träger 18 liegen. Der zweite Prägebereich auf Höhe H₂ umfasst auch ein Raster aus Stützstrukturen 70, deren Abmessungen und Flächendeckung so klein sind, dass sie optisch nicht oder kaum auffallen und deren Funktion beim Herstellungsvorgang weiter unten genauer erläutert wird. Die Höhe wie auch die Richtung der positiven z-Achse wird dabei stets vom Träger 18 ausgehend gemessen. Da das Sicherheitselement 62 auf Betrachtung von der Unterseite, also der Seite des Trägers 18 her ausgelegt ist, erstreckt sich die z-Achse in der Darstellung der Fig. 5 vom Träger weg nach unten.

Die Mikrospiegelprägungen bzw. Mikrospiegelanordnungen 24, 34 enthalten jeweils eine Vielzahl von gegen die x-y-Ebene geneigten Mikrospiegeln, deren lokalen Neigungswinkel gerade so gewählt sind, dass die Reliefstruktur der Mikrospiegelprägungen 24, 34 nach der Farbbeschichtung 26, 36 ein gewünschtes optisches Erscheinungsbild erzeugt. Konkret sind die Neigungswinkel der Mikrospiegel im Ausführungsbeispiel so gewählt, dass die Mikrospiegelanordnungen 24, 26 den herausgewölbten dreidimensionalen Eindruck des Motivs 14 und den Rolling-Bar-Effekt des Teilbereichs 16 erzeugen. Die Mikrospiegel der Mikrospiegelprägungen 24, 34 selbst weisen im Ausführungsbeispiel eine laterale Abmessung von 10 x 10 µm² und eine maximale Höhe h von 3,5 µm auf, während ihr auf die Grundflächen bezogener Höhenversatz ΔH = H₂ - H₁ bei ΔH=6 µm liegt.

Zur Erzeugung eines visuellen Kontrasts sind die Mikrospiegelanordnungen 24, 34 jeweils mit einer Farbbeschichtung 26, 36 versehen, die bei der Betrachtung den unterschiedlichen Farbeindruck der Mikrospiegelanordnungen erzeugen. Im Ausführungsbeispiel weist die Mikrospiegelanordnung 24 auf Höhenstufe H₁ als Farbbeschichtung ein farbkippendes Dünnschichtelement 26 auf, das aus einer Absorberschicht 42, einer Abstandsschicht 44 und einer Metallschicht 46 besteht. Die Mikrospiegelanordnung 34 auf Höhenstufe H₂ weist dagegen als Farbbeschichtung nur eine Metallschicht 46 auf und zeigt einen farbstabilen metallischen Farbeindruck ohne Farbänderung beim Kippen.

Wie in Fig. 5 gezeigt, ist das Sicherheitselement 62 für eine Betrachtung von der Rückseite, also der Trägerseite her ausgelegt. Der Träger 18 ist im Ausführungsbeispiel transparent und bildet einen Teil des auf der Banknote 10 verbleibenden Sicherheitselements. In anderen Gestaltungen kann der Träger 18 nach dem Übertragen des Sicherheitselements 12 auf das Zielsubstrat auch abgezogen werden. In diesem Fall kann für die Herstellung des Sicherheitselements selbstverständlich auch ein nicht-transparenter Träger verwendet werden.

Die beiden Mikrospiegelanordnungen 24, 34 sind im Ausführungsbeispiel der Fig. 5 im gesamten Flächenbereich des Sicherheitselements 12 jeweils unmittelbar aneinander angrenzend angeordnet. Der Teilbereich 66 ist beispielsweise durch einen 5 mm breiten und 2 cm langen gekrümmten Streifen innerhalb eins 2,5 x 2,5 cm² großen Flächenbereichs 64 gebildet. Während der Betrachter im Teilbereich 66 auf die auf Höhenstufe H₂ liegende Mikrospiegelanordnung 24 mit der Metallbeschichtung 46 blickt, wird der visuelle Eindruck im Bereich 64, also außerhalb des Teilbereichs 66 von der auf Höhenstufe H₁ liegenden Mikrospiegelanordnung 24 mit dem farbkippenden Dünnschichtaufbau 26 bestimmt. Im Bereich 64 nimmt der Betrachter daher das von der Mikrospiegelanordnung 24 erzeugte, farbkippende Motiv 64 wahr, während innerhalb des Teilbereichs 66 der metallische Rolling-Bar-Effekt in Erscheinung tritt, bei dem beim Kippen der Banknote 10 ein hell reflektierender Balken entlang des gekrümmten Streifens hin- und her zu laufen scheint. Da der Höhenunterschied der beiden Mikrospiegelanordnungen 24, 34 im Bereich von einigen Mikrometern liegt, ist er für den Betrachter nicht wahrnehmbar, so dass die beiden verschiedenfarbigen Motive und die unterschiedlichen Effekte 64, 66 in exaktem Passer nebeneinander angeordnet zu sein scheinen.

Die erfindungsgemäße Herstellung des Sicherheitselements 62 wird nun mit Bezug auf die Figur 6 näher beschrieben, wobei (a) bis (d) jeweils Zwischenschritte bei der Herstellung des Sicherheitselements zeigen.

Gegenüber der im Zusammenhang mit den Figuren 2 bis 4 beschriebenen Gestaltung besteht bei der vorliegenden Variante eine Schwierigkeit darin, dass die Teilbereiche 64, 66 großflächig sind und Abmessungen von mehreren Millimetern aufweisen. Während das Metalltransferverfahren mittels Akzeptorfolie bei den oben beschriebenen Rasterbereichen einer Abmessung von 100 µm oder weniger problemlos eingesetzt werden kann, ist dies bei großflächigen Effektbereichen, wie sie in der vorliegenden Variante auftreten, nicht mehr ohne weiteres der Fall.

Die Erfinder haben erkannt, dass bei Vertiefungsbereichen einer Ausdehnung von etwa 200 µm oder mehr zunehmend die Gefahr besteht, dass die Akzeptorfolie beim Kaschierprozess nicht nur die Erhebungen kontaktiert, sondern auch in die Vertiefungen gedrückt wird und beim Abheben dort unerwünscht Material entfernt. Zur Abhilfe sind daher in der vorliegenden Ausgestaltung in den Vertiefungen kleine Stützstrukturen 70 vorgesehen. Bei diesen Stützstrukturen 70 handelt es sich um kleine erhabene Strukturen, die in größeren Vertiefungsbereichen das Abtauchen der Akzeptorfolie und das Aufsetzen auf den tiefer liegenden Mikrospiegeln und damit die unerwünschte Entfernung von Material von der Oberfläche dieser Mikrospiegel verhindert.

Mit Bezug zunächst auf Fig. 6(a) wird ein transparenter Träger 18, beispielsweise eine transparente PET-Folie bereitgestellt und mit einer transparenten Prägelackschicht 22 mit schwacher Metallhaftung versehen. Mit einem selbst nicht gezeigten Prägewerkzeug wird die gewünschte Prägestruktur 75 mit den Mikrospiegelprägungen 24, 34 und einer Stützrasterprägung 70 in die Prägelackschicht 22 eingeprägt.

Die Stützstrukturen 70 stellen schmale Stützpfeiler einer Linienbreite von weniger als 20 µm, insbesondere weniger als 10 µm, beispielsweise von etwa 5 µm dar. Die Höhe der Stützstrukturen 70 liegt im Ausführungsbeispiel in Wesentlichen auf der Höhenstufe H₂ der Mikrospiegelprägungen 34, sie erstrecken sich also hier um ΔH = 6 µm über die Höhenstufe H₁ der Mikrospiegelprägungen 24. Die Stützstrukturen 70 sind vorteilhaft in einem ein- oder zweidimensionalen Raster angeordnet und weisen eine Flächendeckung von nur 5% auf, um optisch nicht störend aufzufallen.

Die so erzeugte Prägestruktur 75 wird vollflächig mit einer semitransparenten Absorberschicht 42 und einer Abstandsschicht 44 eines Dünnschichtaufbaus bedampft, wie bereits im Zusammenhang mit Fig. 3 beschrieben. Insbesondere kann als semitransparente Absorberschicht 42 eine dünne Aluminiumschicht einer Schichtdicke von 1 nm bis 10 nm und als Abstandsschicht 44 eine 100 bis 400 nm dicke SiO₂-Schicht eingesetzt werden. Die nach diesen Schritten entstandene beschichtete Prägestruktur 75, 42, 44 ist in Fig. 6(b) gezeigt.

Mit Bezug auf Fig. 6(c) wird nun eine Akzeptorfolie mit guter Metallhaftung bereitgestellt (nicht gezeigt) und mit der beschichteten Prägestruktur der Fig. 6(b) in Kontakt gebracht. Die Akzeptorfolie ist wie bereits im Zusammenhang mit Fig. 3 beschrieben ausgebildet und kann beispielsweise mit einer Klebeschicht versehen sein und unter erhöhtem Druck und bei erhöhter Temperatur mit der beschichteten Prägestruktur 75, 42, 44 zusammengepasst werden, um die Akzeptorfolie mit den auf den höher liegenden Mikrospiegelprägungen 34 und den Stützstrukturen 70 liegenden Beschichtungsteilen zu verkleben. Die tiefer liegenden Mikrospiegelprägungen 24 sind durch den Höhenversatz ΔH zu den höher liegenden Mikrospiegelprägungen 34 und den Stützstrukturen 70 geschützt und verkleben daher trotz der Großflächigkeit der Vertiefungsbereiche nicht mit der Akzeptorfolie.

Beim nachfolgenden Trennen von Akzeptorfolie und Prägestruktur, beispielsweise durch Trennwicklung werden die verklebten Bereiche der Absorberschicht 42 und der Abstandsschicht 44 zusammen mit der Akzeptorfolie entfernt. Diese Schichten werden daher selektiv nur in den höher liegenden Bereichen 34 und von den Stützstrukturen 70 der Prägestruktur entfernt, während sie in den tiefer liegenden Bereichen 24 erhalten bleiben, wie in Fig. 6(c) dargestellt.

Anschließend wird die so strukturierte Prägestruktur 75 vollflächig mit einer Reflektorschicht 46, beispielsweise einer 50 nm dicken Aluminiumschicht versehen. In den tiefer liegenden Bereichen 24 wird dadurch das Dünnschichtelement 26 vervollständigt, während sich in den höher liegenden Bereichen 34 eine reine Metallbeschichtung der Mikrospiegel ergibt, wie in Fig. 6(d) gezeigt. Die Stützstrukturen 70 werden zwar ebenfalls metallisiert, durch ihre schmale Linienbreite und ihre geringe Flächendeckung ist allerdings sichergestellt, dass sie optisch nicht störend in Erscheinung treten. Auch hier kann, um eine bessere Haftung der Aluminiumschicht 46 auf dem Lack 22 sicherzustellen, der Bedampfung mit Aluminium eine Chrombekeimung oder das Aufbringen einer ultradünnen Chromschicht einer Dicke von weniger als 3 nm vorangestellt werden.

Zuletzt wird die Strukturseite der metallisierten Prägestruktur noch mit einer Lackbeschichtung 48 und gegebenenfalls weiteren Beschichtungen versehen. Um eine gute Haftung zwischen dem Lack 48 und der Aluminiumbeschichtung 46 sicherzustellen kann der Höhenversatz ΔH relativ groß (5 µm bis 10 µm) gewählt werden, so dass der Lack an den Flanken der Prägestruktur 75 anhaften und den Verbund stärken kann.

In beiden Gestaltungsvarianten kommen für die Farbbeschichtungen 26, 36 insbesondere auch folgende Möglichkeiten in Frage:
I) Nach dem Metalltransfer (Fig. 3(d) bzw. 6(c)) kann selektiv, beispielsweise per Tampondruck eine lasierende Buntfarbe auf die höher liegenden Prägebereiche 34 bzw. 34 und 70 übertragen werden. Abschließend wird vollflächig eine dicke Aluminiumschicht (d ≥ 30 nm) aufgedampft. Die Farbbeschichtung 36 ist dann durch die Schichtenfolge lasierende Buntfarbe/dicke Aluminiumschicht gegeben, die Farbbeschichtung 26 wie oben beschrieben durch ein Dünnschichtelement mit der Schichtenfolge dünne Aluminiumschicht/SiO₂-Abstandsschicht/dicke Aluminiumschicht. Die Farbbeschichtung 26 ist dabei farbkippend, die Farbbeschichtung 36 farbstabil.
II) Nach dem Metalltransfer (Fig. 3(d) bzw. 6(c)) werden auf beide Prägebereiche 24, 34 vollflächig eine dünne Chromschicht und darauf eine zweite dielektrische SiO₂-Abstandsschicht aufgebracht. Abschließend wird vollflächig eine dicke Aluminiumschicht (d ≥ 30 nm) aufgedampft. Die Farbbeschichtung 36 ist dann durch die Schichtenfolge Chromschicht/zweite SiO₂-Abstandsschicht / dicke Aluminiumschicht gegeben, die Farbbeschichtung 26 durch ein 5-schichtiges Dünnschichtelement mit der Schichtenfolge dünne Aluminiumschicht/erste SiO₂-Abstandsschicht/ Chromschicht/zweite SiO₂-Abstandsschicht / dicke Aluminiumschicht. Beide Farbbeschichtungen 26, 36 sind farbkippend mit unterschiedlichen Farbkippeffekten.
III) Nach dem Metalltransfer (Fig. 3(d) bzw. 6(c)) wird auf beide Prägebereiche 24, 34 vollflächig eine zweite dielektrische SiO₂₋Abstandsschicht mit einer Schichtdicke von 70 bis 200 nm aufgedampft. Abschließend wird vollflächig eine dicke Aluminiumschicht (d ≥ 30 nm) aufgedampft. Die Farbbeschichtung 36 ist dann durch die Schichtenfolge zweite SiO₂-Schicht/ dicke Aluminiumschicht gegeben, die Farbbeschichtung 26 durch ein Dünnschichtelement mit der Schichtenfolge dünne Aluminiumschicht/erste SiO₂-Abstandsschicht/ zweite SiO₂-Abstandsschicht/dicke Aluminiumschicht. Beide Farbbeschichtungen 26, 36 sind farbkippend mit unterschiedlichen Farbkippeffekten.

### Bezugszeichenliste

- 10: Banknote
- 12: erstes Sicherheitselement
- 14-A, 14-B: herauswölbende Motive
- 16: Kipprichtung
- 18: Träger
- 22: Prägelackschicht
- 24: erster Prägebereich
- 25: Prägestrukturbereich
- 26: Farbbeschichtung
- 34: zweiter Prägebereich
- 36: Farbbeschichtung
- 40, 40-A, 40-B: Betrachter
- 42: Absorberschicht
- 44: Abstandsschicht
- 46: Metallschicht
- 50: Raster
- 52,54: Rasterbereiche
- 60: Akzeptorfolie
- 62: zweites Sicherheitselement
- 64: herauswölbendes Motiv
- 66: Teilbereich
- 70: Stützstrukturen
- 75: Prägestrukturbereich

## Patentansprüche

1. Verfahren zum Herstellen eines optisch variablen Sicherheitselements, bei dem
- ein Träger (18) bereitgestellt wird, dessen Flächenausdehnung eine darauf senkrecht stehende z-Achse definiert,
- in einem Flächenbereich eine transparente Prägelackschicht (22) auf den Träger (18) aufgebracht wird,
- in die Prägelackschicht (22) zumindest eine erste, tiefer liegende Reliefstruktur (24) und eine zweite, höher liegende reliefstruktur (34) geprägt werden, die in z-Richtung in unterschiedlichen Höhenstufen bezogen auf den flächigen Träger (18) angeordnet sind,
- die zumindest zwei Reliefstrukturen (24, 34) mit einer Nichtmetall-Beschichtung (26) aus einem nichtmetallischen Material versehen werden, und
- die Nichtmetall-Beschichtung (26) selektiv von der zweiten, höher liegenden Reliefstruktur (34) abgehoben wird, **dadurch gekennzeichnet, dass** dieReliefstrukturen (24, 34) durch Mikrospiegelanordnungen mit gerichteten Mikrospiegeln gebildet werden.

2. Verfahren nach Anspruch 1, **dadurch gekennzeichnet, dass** die Nichtmetall-Beschichtung von der höher liegenden Reliefstruktur abgehoben wird, indem der mit den Reliefstrukturen versehene Träger mit einer Akzeptorfolie, vorzugsweise bei erhöhtem Druck und erhöhter Temperatur, in Kontakt gebracht wird, wobei die Nichtmetall-Beschichtung der höher liegenden Reliefstruktur an der Akzeptorfolie anhaftet, und die Akzeptorfolie nachfolgend abgehoben wird und dabei die Nichtmetall-Beschichtung nur von der höher liegenden Reliefstruktur entfernt.

3. Verfahren nach Anspruch 1 oder 2, **dadurch gekennzeichnet, dass** die zumindest zwei Reliefstrukturen vor der Beschichtung mit dem nichtmetallischen Material mit einer semitransparenten Absorberschicht versehen werden und die semitransparente Absorberschicht zusammen mit der Nichtmetall-Beschichtung selektiv von den höher liegenden Reliefstrukturen abgehoben wird.

4. Verfahren nach einem der Ansprüche 1 bis 3, **dadurch gekennzeichnet, dass** die höher liegende Reliefstruktur nach dem Abheben der Nichtmetall-Beschichtung selektiv mit einer weiteren Beschichtung versehen wird.

5. Verfahren nach einem der Ansprüche 1 bis 4, **dadurch gekennzeichnet, dass** die zumindest zwei Reliefstrukturen nach dem Abheben der Nichtmetall-Beschichtung und gegebenenfalls einer selektiven weiteren Beschichtung der höher liegenden Reliefstruktur mit einer Metallbeschichtung versehen werden.

6. Verfahren nach einem der Ansprüche 1 bis 5, **dadurch gekennzeichnet, dass** die Reliefstrukturen jeweils mit einer vorgegebenen maximalen Ganghöhe erzeugt werden und der Abstand der zumindest zwei Höhenstufen in z-Richtung größer als die vorgegebene maximale Ganghöhe der tiefer liegenden Reliefstruktur gewählt wird.

7. Verfahren nach einem der Ansprüche 1 bis 6, **dadurch gekennzeichnet, dass** die Reliefstrukturen mit einer maximalen Ganghöhe von 3,5 µm oder weniger erzeugt werden und der Abstand der zumindest zwei Höhenstufen in z-Richtung zwischen 1 µm und 10 µm, vorzugsweise zwischen 3 µm und 7 µm gewählt wird.

8. Verfahren nach einem der Ansprüche 1 bis 7, **dadurch gekennzeichnet, dass**
die gerichteten Mikrospiegel plane Spiegel, Hohlspiegel und/oder fresnelartigen Spiegel sind, und/oder
die lateralen Abmessungen der Mikrospiegel vorteilhaft unterhalb von 30 µm, bevorzugt unterhalb von 10 µm, liegen.

9. Verfahren nach einem der Ansprüche 1 bis 8, **dadurch gekennzeichnet, dass** ein transparenter Träger bereitgestellt wird oder der Träger ablösbar mit der Prägelackschicht verbunden wird, um eine Betrachtung des Sicherheitselements von der Seite der Prägelackschicht her zu ermöglichen.

10. Verfahren nach einem der Ansprüche 1 bis 9, **dadurch gekennzeichnet, dass** in die Prägelackschicht ein Raster mit ersten Rasterbereichen mit der ersten, tiefer liegenden Reliefstruktur und mit zweiten Rasterbereichen mit der zweiten, höher liegenden Reliefstruktur geprägt wird, wobei die Abmessungen der Rasterbereiche in einer oder beiden lateralen Richtungen unterhalb von 140 µm, vorzugsweise zwischen 20 µm und 100 µm, insbesondere zwischen 20 µm und 60 µm liegen.

11. Verfahren nach einem der Ansprüche 1 bis 10, **dadurch gekennzeichnet, dass** in die Prägelackschicht Effektbereiche mit der ersten, tiefer liegenden Reliefstruktur bzw. mit der zweiten, höher liegenden Reliefstruktur geprägt werden, wobei zumindest ein Teil der Effektbereiche laterale Abmessungen von mehr als 140 µm aufweist.

12. Verfahren nach Anspruch 11, **dadurch gekennzeichnet, dass** in denjenigen Effektbereichen mit tiefer liegenden Reliefstruktur, die laterale Abmessungen von mehr als 200 µm aufweisen, zusätzlich eine Anordnung von höher liegenden Stützstrukturen vorgesehen wird, deren relative Flächendeckung kleiner als 15%, vorzugsweise kleiner als 10% ist

13. Verfahren nach Anspruch 11 oder 12, **dadurch gekennzeichnet, dass** die Stützstrukturen in Form schmaler Stege oder Stützpfeiler mit einer Linienbreite von weniger als 20 µm, insbesondere weniger als 10 µm, ausgebildet werden, und/oder dass die Stützstrukturen in einem ein- oder zweidimensionalen Raster angeordnet werden.

14. Verfahren nach einem der Ansprüche 1 bis 13, **dadurch gekennzeichnet, dass** auf der tiefer liegenden Reliefstruktur eine erste Farbbeschichtung erzeugt wird, die die genannte Nichtmetall-Beschichtung umfasst, bevorzugt, dass die erste Farbbeschichtung die genannte semitransparente Absorberschicht, die genannte Nichtmetall-Beschichtung und die genannte Metallbeschichtung umfasst und dadurch ein farbkippendes Dünnschichtelement bildet.

15. Verfahren nach einem der Ansprüche 1 bis 14, **dadurch gekennzeichnet, dass** auf der höher liegenden Reliefstruktur eine zweite Farbbeschichtung erzeugt wird, die die genannte Metallbeschichtung umfasst, bevorzugt, dass die zweite Farbbeschichtung neben der genannten Metallbeschichtung auch eine lasierende Buntfarbe umfasst und dadurch eine farbstabile Farbbeschichtung bildet.

16. Verfahren nach einem der Ansprüche 1 bis 14, **dadurch gekennzeichnet, dass** auf der höher liegenden Reliefstruktur eine zweite Farbbeschichtung erzeugt wird, die neben der genannte Metallbeschichtung entweder eine Dielektrikumsschicht umfasst oder eine Absorberschicht und eine Dielektrikumsschicht umfasst und dadurch ein farbkippendes Dünnschichtelement bildet, vorzugweise mit einem Farbkippeffekt, der sich von dem Farbkippeffekt eines auf der tiefer liegenden Reliefstruktur angeordneten Dünnschichtelements unterscheidet.

## Claims

1. Method for producing an optically variable security element, wherein
- a carrier (18) is provided whose surface extent defines a z-axis perpendicular thereto,
- in a surface region, a transparent embossing varnish layer (22) is applied to the carrier (18),
- at least a first, lower relief structure (24) and a second, higher relief structure (34) are embossed into the embossing varnish layer (22), the structures in z-direction being disposed at different height levels relative to the sheetlike carrier (18),
- the at least two relief structures (24, 34) are provided with a non-metal coating (26) composed of a non-metallic material, and
- the non-metal coating (26) is lifted selectively from the second, higher relief structure (34),
**characterized in that** the relief structures (24, 34) are formed by micromirror arrangements with directed micromirrors.

2. Method according to Claim 1, **characterized in that** the non-metal coating is lifted from the higher relief structure by contacting the carrier, provided with the relief structures, with an acceptor foil, preferably at elevated pressure and elevated temperature, the non-metal coating of the higher relief structure adhering to the acceptor foil, and the acceptor foil is subsequently lifted and in the process removes the non-metal coating only from the higher relief structure.

3. Method according to Claim 1 or 2, **characterized in that** the at least two relief structures, before the coating with the non-metallic material, are provided with a semi-transparent absorber layer, and the semi-transparent absorber layer is lifted together with the non-metal coating selectively from the higher relief structures.

4. Method according to any of Claims 1 to 3, **characterized in that** the higher relief structure, after the lifting of the non-metal coating, is provided selectively with a further coating.

5. Method according to any of Claims 1 to 4, **characterized in that** the at least two relief structures, after the lifting of the non-metal coating and, optionally, after selective further coating of the higher relief structure, are provided with a metal coating.

6. Method according to any of Claims 1 to 5, **characterized in that** the relief structures are each generated with a specified maximum pitch and the distance between the at least two height levels in z-direction is selected to be greater than the specified maximum pitch of the lower relief structure.

7. Method according to any of Claims 1 to 6, **characterized in that** the relief structures are generated with a maximum pitch of 3.5 µm or less and the distance between the at least two height levels in z-direction is selected to be between 1 µm and 10 µm, preferably between 3 µm and 7 µm.

8. Method according to any of Claims 1 to 7, **characterized in that**
the directed micromirrors are planar mirrors, hollow mirrors and/or Fresnel-type mirrors, and/or
the lateral dimensions of the micromirrors are advantageously below 30 µm, preferably below 10 µm.

9. Method according to any of Claims 1 to 8, **characterized in that** a transparent carrier is provided or the carrier is releasably connected to the embossing varnish layer, in order to allow the security element to be viewed from the side of the embossing varnish layer.

10. Method according to any of Claims 1 to 9, **characterized in that** a raster having first raster regions with the first, lower relief structure and having second raster regions with the second, higher relief structure is embossed into the embossing varnish layer, the dimensions of the raster regions in one or both lateral directions being below 140 µm, preferably between 20 µm and 100 µm, more particularly between 20 µm and 60 µm.

11. Method according to any of Claims 1 to 10, **characterized in that** effect regions with the first, lower relief structure and, respectively, with the second, higher relief structure are embossed into the embossing varnish layer, at least some of the effect regions having lateral dimensions of more than 140 µm.

12. Method according to Claim 11, **characterized in that** in those effect regions with lower relief structure that have lateral dimensions of more than 200 µm, an arrangement of higher support structures is additionally provided, the relative surface coverage thereof being less than 15%, preferably less than 10%.

13. Method according to Claim 11 or 12, **characterized in that** the support structures are configured in the form of narrow struts or support pillars having a line width of less than 20 µm, more particularly less than 10 µm, and/or **in that** the support structures are disposed in a one- or two-dimensional raster.

14. Method according to any of Claims 1 to 13, **characterized in that** a first ink coating which comprises the stated non-metal coating is generated on the lower relief structure, preferably **in that** the first ink coating comprises the stated semi-transparent absorber layer, the stated non-metal coating and the stated metal coating and thereby forms a colour-flopping thin-film element.

15. Method according to any of Claims 1 to 14, **characterized in that** a second ink coating which comprises the stated metal coating is generated on the higher relief structure, preferably **in that** the second ink coating comprises not only the stated metal coating but also a translucent chromatic ink and thereby forms a colour-stable ink coating.

16. Method according to any of Claims 1 to 14, **characterized in that**, on the higher relief structure, a second ink coating is generated which comprises not only the stated metal coating but also either a dielectric layer or an absorber layer and a dielectric layer and thereby forms a colour-flopping thin-film element, preferably having a colour flop effect which differs from the colour flop effect of a thin-film element disposed on the lower relief structure.

## Revendications

1. Procédé de fabrication d'un élément de sécurité optiquement variable, dans lequel
- on fournit un support (18), dont la surface définit un axe z qui lui est perpendiculaire,
- dans une zone de la surface, on applique sur le support (18) une couche de vernis d'estampage transparente (22),
on estampe dans la couche de vernis d'estampage (22) au moins une première structure gaufrée en creux (24) et une deuxième structure gaufrée en relief (34), qui sont disposées dans la direction z à différents paliers de hauteur par rapport au support plan (18),
- on pourvoit les au moins deux structures gaufrées (24, 34) d'un revêtement non métallique (26) en un matériau non métallique, et
- on enlève sélectivement le revêtement non métallique (26) de la deuxième structure gaufrée en relief (34),
**caractérisé en ce que** les structures gaufrées (24, 34) sont formées de dispositions de micromiroirs comportant des micromiroirs orientés.

2. Procédé selon la revendication 1, **caractérisé en ce que** le revêtement non métallique est enlevé de la structure gaufrée en relief par mise en contact des supports pourvus des structures gaufrées avec une feuille acceptrice, de préférence sous pression et à température élevées, le revêtement non métallique de la structure gaufrée en relief adhérant à la feuille acceptrice, et la feuille acceptrice étant ensuite enlevée, le revêtement non métallique étant alors éliminé uniquement de la structure gaufrée en relief.

3. Procédé selon la revendication 1 ou 2, **caractérisé en ce que** les au moins deux structures gaufrées sont, avant le revêtement avec un matériau non métallique, pourvues d'une couche absorbante semi-transparente, et la couche absorbante semi-transparente est sélectivement enlevée des structures gaufrées en relief, en même temps que le revêtement non métallique.

4. Procédé selon l'une des revendications 1 à 3, **caractérisé en ce que** la structure gaufrée en relief est, après enlèvement du revêtement non métallique, sélectivement pourvue d'un autre revêtement.

5. Procédé selon l'une des revendications 1 à 4, **caractérisé en ce que** les au moins deux structures gaufrées sont, après enlèvement du revêtement non métallique et éventuellement d'un autre revêtement sélectif de la structure gaufrée en relief, pourvues d'une couche métallique.

6. Procédé selon l'une des revendications 1 à 5, **caractérisé en ce que** les structures gaufrées sont chacune produites avec un pas maximal prédéfini, et la distance des au moins deux paliers en hauteur dans la direction z est choisie supérieure au pas maximal prédéfini de la structure gaufrée en creux.

7. Procédé selon l'une des revendications 1 à 6, **caractérisé en ce que** les structures gaufrées sont produites avec un pas maximal de 3,5 µm ou moins, et la distance des au moins deux paliers en hauteur dans la direction z est choisie entre 1 µm et 10 µm, de préférence entre 3 µm et 7 µm.

8. Procédé selon l'une des revendications 1 à 7, **caractérisé en ce que** les micromiroirs orientés sont des miroirs plans, des miroirs creux et/ou des miroirs de Fresnel, et/ou
les dimensions latérales des micromiroirs sont avantageusement inférieures à 30 µm, de préférence inférieures à 10 µm.

9. Procédé selon l'une des revendications 1 à 8, **caractérisé en ce qu**'on fournit un support transparent, ou on relie le support d'une manière amovible à la couche de vernis d'estampage, pour permettre une observation de l'élément de sécurité à partir du côté de la couche de vernis d'estampage.

10. Procédé selon l'une des revendications 1 à 9, **caractérisé en ce qu**'on estampe dans la couche de vernis d'estampage un quadrillage avec des premières zones de quadrillage ayant la première structure gaufrée en creux et des deuxièmes zones de quadrillage ayant la deuxième structure gaufrée en relief, les dimensions des zones du quadrillage étant, dans une direction latérale ou dans les deux, inférieures à 140 µm, de préférence entre 20 µm et 100 µm, en particulier entre 20 µm et 60 µm.

11. Procédé selon l'une des revendications 1 à 10, **caractérisé en ce qu**'on estampe dans la couche de vernis d'estampage des zones à effets ayant la première structure gaufrée en creux ou la deuxième structure gaufrée en relief, au moins une partie des zones à effets présentant des dimensions latérales inférieures à 140 µm.

12. Procédé selon la revendication 11, **caractérisé en ce qu'**on prévoit en outre, dans les zones à effets ayant une structure gaufrée en creux, qui présentent des dimensions latérales supérieures à 200 µm, une disposition de structures de soutien en relief, dont la couverture relative est inférieure à 15 %, de préférence inférieure à 10 %.

13. Procédé selon la revendication 11 ou 12, **caractérisé en ce que** les structures de soutien sont conçues sous forme de traverses étroites ou de piliers de soutènement, avec une largeur de trait inférieure à 20 µm, en particulier inférieure à 10 µm, et/ou **en ce que** les structures de soutien sont disposées selon un quadrillage mono- ou bidimensionnel.

14. Procédé selon l'une des revendications 1 à 13, **caractérisé en ce qu'**on produit sur la structure gaufrée en creux un premier revêtement coloré, qui comprend le revêtement non métallique mentionné, de préférence **en ce que** le premier revêtement coloré comprend la couche absorbante semi-transparente mentionnée, le revêtement non métallique mentionné et le revêtement métallique mentionné, en formant de ce fait un élément en couche mince goniochromatique.

15. Procédé selon l'une des revendications 1 à 14, **caractérisé en ce qu'**on produit sur la structure gaufrée en relief un deuxième revêtement coloré, qui comprend le revêtement métallique mentionné, de préférence **en ce que** le deuxième revêtement coloré comprend aussi, outre le revêtement métallique mentionné, une encre colorée transparente, et de ce fait forme un revêtement coloré à couleur stable.

16. Procédé selon l'une des revendications 1 à 14, **caractérisé en ce qu'**on produit sur la structure gaufrée en relief un deuxième revêtement coloré, qui outre le revêtement métallique mentionné, soit comprend une couche diélectrique, soit comprend une couche absorbante et une couche diélectrique, et de ce fait forme un revêtement en couche mince goniochromatique, de préférence avec un effet goniochromatique qui se distingue de l'effet goniochromatique d'un élément en couche mince disposé sur la structure gaufrée en creux.
